Europäisches Patentamt

European Patent Office

Office européen des brevets

(11) Numéro de publication: **0 164 808**
**A1**

## (12) DEMANDE DE BREVET EUROPEEN

(21) Numéro de dépôt: 85200913.3

(22) Date de dépôt: 11.06.85

(51) Int. Cl.⁴: **G 01 S 7/52**
**G 01 S 15/89, G 01 H 5/00**

(30) Priorité: 15.06.84 FR 8409411

(43) Date de publication de la demande:
18.12.85 Bulletin 85/51

(84) Etats contractants désignés:
BE DE FR GB SE

(71) Demandeur: **Laboratoires d'Electronique et de Physique Appliquée L.E.P.**
**3, Avenue Descartes**
**F-94450 Limeil-Brévannes(FR)**

(84) Etats contractants désignés:
**FR**

(71) Demandeur: **N.V. Philips' Gloeilampenfabrieken**
**Groenewoudseweg 1**
**NL-5621 BA Eindhoven(NL)**

(84) Etats contractants désignés:
**BE DE GB SE**

(72) Inventeur: **Nicolas, Jean-Marie**
**Société Civile S.P.I.D. 209 rue de l'université**
**F-75007 Paris(FR)**

(74) Mandataire: **Landousy, Christian et al,**
**Société Civile S.P.I.D. 209, Rue de l'Université**
**F-75007 Paris(FR)**

(54) Appareil d'examen de milieux par échographie ultrasonore.

(57) Appareil d'examen de milieux par échographie ultrasonore comprenant un transducteur ultrasonore d'émission (10) et un transducteur ultrasonore de réception (20) auxquels sont associés un étage d'émission (30), un étage de réception (40) constitué d'une voie de traitement (100) des échos renvoyés vers le transducteur de réception par les obstacles rencontrés dans ladite région, et un étage (60) de mémorisation et/ou de visualisation, caractérisé en ce que le transducteur d'émission (10) est également récepteur et en ce que l'étage de réception (40) comprend aussi une voie (200) de traitement des signaux de sortie dudit transducteur d'émission-réception (10) ainsi constitué et un soustracteur (500) dont la sortie est reliée à une première entrée (560) de l'étage de mémorisation et/ou de visualisation et dont les deux entrées reçoivent les signaux de sorties desdites voies (100) et (200) représentatifs des temps de vol respectivement réel et théorique entre les transducteurs.

*Application* : échographes

FIG.1

# APPAREIL D'EXAMEN DE MILIEUX PAR ECHOGRAPHIE ULTRASONORE

La présente invention concerne un appareil d'examen de milieux par échographie ultrasonore comprenant au moins un transducteur ultrasonore d'émission et au moins un transducteur ultrasonore de réception auxquels sont associés un étage d'émission pour l'émission répétée d'ondes ultrasonores vers la région à explorer, un étage de réception constitué d'une voie de traitement des échos renvoyés vers le transducteur de réception par les obstacles rencontrés dans ladite région, et un étage de mémorisation et/ou de visualisation des informations délivrées par l'étage de réception.

Cette invention trouve une application importante dans le domaine médical, pour l'examen de tissus biologiques et l'aide au diagnostic qui peut en résulter, ainsi qu'éventuellement dans le domaine du contrôle non destructif de matériaux.

Le brevet des Etats-Unis d'Amérique n° 4395909 délivré le 2 août 1983 au nom de la société cessionnaire Imaging Associates décrit un appareil d'examen de milieux par échographie ultrasonore qui comprend, comme indiqué sur la figure jointe audit brevet, des transducteurs d'émission 11 et 14, des transducteurs de réception 12, un étage d'émission composé d'un circuit 17 d'excitation des transducteurs d'émission et d'un circuit d'horloge 18, un étage de réception sous la forme d'une voie de traitement composée d'un convertisseur analogique-numérique 22, d'une mémoire 21, d'un circuit de traitement 23 et d'un circuit de commande 24, et un étage 25 de visualisation des informations délivrées par l'étage de réception.

Dans cet appareil, les informations reçues par les transducteurs 12 traduisent à la fois des variations de vitesse ultrasonore, de densité, d'atténuation, et l'appareil est destiné à permettre, à partir d'une référence située dans le champ d'exploration ultrasonore et en exploitant lesdites informations reçues, l'obtention d'images synthétiques de bonne qualité.

Le but de l'invention est de proposer un nouvel appareil d'examen de milieux par échographie ultrasonore, utilisant exclusivement des informations représentatives du temps de vol des ondes ultrasonores pour assurer une analyse précise des milieux explorés grâce à l'obtention d'images donnant des indications sur la vitesse des ondes ultrasonores dans ces milieux.

L'invention concerne à cet effet un appareil tel que défini dans le préambule et caractérisé en ce que le transducteur d'émission est également récepteur et en ce que l'étage de réception comprend aussi une voie de traitement des signaux de sortie dudit transducteur d'émission-réception ainsi constitué et un soustracteur dont la sortie est reliée à une première entrée de l'étage de mémorisation et/ou de visualisation et dont les deux entrées reçoivent les signaux de sorties desdites voies représentatifs des temps de vol respectivement réel et théorique entre les transducteurs.

La structure ainsi proposée consiste en un nouveau dispositif d'imagerie qui permet le stockage et/ou la visualisation (en mode de représentation de type A ou B) des variations de temps de vol des ondes ultrasonores, et donc des variations de vitesse ultrasonore dans les milieux explorés, qui constituent des informations très précieuses pour renseigner sur la nature de ces milieux.

Les particularités et avantages de l'invention apparaîtront maintenant de façon plus précise dans la description qui suit et dans les dessins annexés, donnés à titre d'exemples non limitatifs et dans lesquels :

- les figures 1 et 2 montrent respectivement un premier exemple de réalisation, à un seul transducteur de réception, de l'appareil selon l'invention et une variante de réalisation d'une partie de l'appareil de la figure 1 ;

- la figure 3 montre un autre exemple de réalisation, à n transducteurs de réception, de l'appareil selon l'invention.

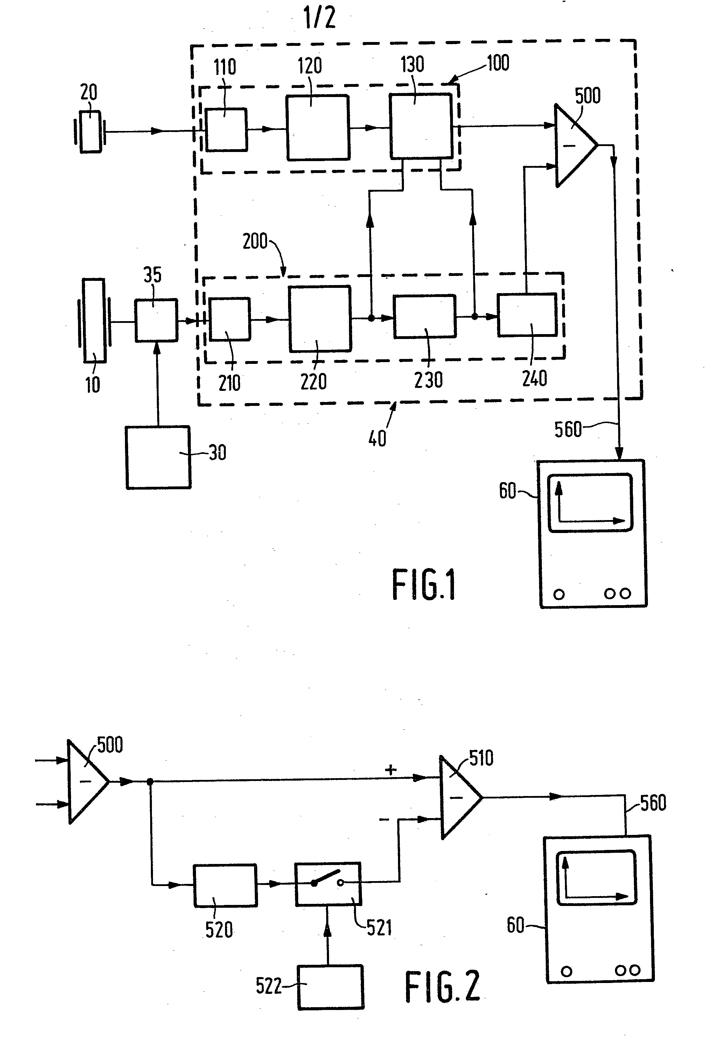

En référence à la figure 1, l'appareil comprend, dans un premier mode de réalisation, un transducteur ultrasonore d'émission 10 et un transducteur ultrasonore de réception 20 dont les positions mutuelles sont parfaitement définies et connues. Au transducteur d'émission 10 est associé un étage d'émission 30 pour l'émission répétée d'ondes ultrasonores vers la région à examiner. Au transducteur de réception 20 est associé un étage de réception 40 constitué d'une voie de traitement 100 des échos renvoyés vers le transducteur de réception par les obstacles rencontrés dans ladite région, les informations délivrées par cette voie de traitement étant destinées à être envoyées vers un étage 60 de mémorisation et/ou de visualisation.

Conformément à l'invention, le transducteur d'émission 10 est également récepteur (et sera appelé transducteur d'émission-réception 10 dans la suite de la description) et l'étage de réception 40 précédé d'un circuit d'interface 35 pour éviter son aveuglement par l'étage d'émission 30 comprend donc aussi une voie 200 de traitement des signaux de sortie de ce transducteur. La première voie de traitement 100 comprend en série un premier convertisseur analogique-numérique 110, une première mémoire 120 et un premier circuit de traitement 130, tandis que la voie 200 de traitement des signaux de sortie du transducteur d'émission-réception 10 comprend en série un circuit de conversion analogique-numérique 210, un circuit de mémorisation 220, un circuit de sélection de distance 230 définissant la profondeur d'étude et un circuit de calcul de temps de vol 240. La cadence de conversion du convertisseur 110 et du circuit 210 correspond, dans l'exemple ici décrit, à une fréquence de 20 MHz. Les sorties du circuit de mémorisation 220 et du circuit de sélection de distance 230 sont envoyées vers le premier circuit de traitement 130. En sortie des voies 100 et 200, il est prévu un soustracteur 500 dont la sortie est reliée à une entrée 560 de l'étage 60 de mémorisation et/ou de visualisation et dont les deux entrées reçoivent les signaux de sortie desdites voies 100 et 200, représentatifs des temps de vol respectivement réel et théorique entre les deux transducteurs.

Le fonctionnement de la structure ainsi décrite est le suivant. A partir des signaux stockés en mémoire 220 après conversion dans le circuit 210, le circuit de sélection de distance 230 sélectionne dans le cas présent une cible ponctuelle -en fait le temps de vol correspondant entre cette cible et le transducteur d'émission-réception 10- sur l'axe de propagation des ondes ultrasonores. Le circuit de calcul 240 calcule alors la profondeur moyenne correspondante, dans l'hypothèse d'une vitesse ultrasonore constante, et en déduit dans cette même hypothèse le temps de vol théorique entre le transducteur d'émission-réception 10, la cible sélectionnée et le transducteur de réception 20. Dans la voie de traitement 100, le circuit de traitement 130 effectue des corrélations entre les signaux issus des mémoires 120 et 220 et opère la sélection de ceux des échos reçus par le transducteur 20 qui proviennent de la cible ponctuelle sélectionnée par le circuit 230 dans la voie 200. Cette sélection est permise par l'existence de la connexion entre la sortie du circuit 230 et l'entrée du circuit 130. Le circuit de traitement 130 délivre alors le temps de vol réel entre le transducteur d'émission-réception 10, la cible sélectionnée et le transducteur de réception 20. Le soustracteur 500 délivre ensuite, à partir des signaux de sorties des voies 100 et 200, un signal représentatif de la différence entre ces temps de vol théorique et réel. Ce signal de différence de temps de vol, qui est un indicateur des variations transversales de la vitesse ultrasonore dans le milieu exploré, est envoyé vers l'entrée 560 de l'étage de mémorisation et/ou de visualisation qui permet, selon les nécessités, le stockage des résultats de mesure pour la ligne ainsi analysée ou leur visualisation en mode A. Si l'appareil est équipé d'une commande de balayage, il est possible alors de réaliser une acquisition de résultats ligne par ligne puis la représentation de ces résultats en mode B sur un écran dont le balayage en X correspond par exemple à la profondeur d'exa-ment et le balayage en Y au déplacement de l'appareil perpendiculairement ou transversalement à la direction d'examen.

A l'appareil qui vient d'être ainsi décrit dans sa structure et son fonctionnement, il est possible d'adjoindre en parallèle une voie de traitement traditionnel, soit placée à l'entrée du circuit de conversion analogique-numérique 210 et comprenant alors un détecteur d'enveloppe analogique (éventuellement, un amplificateur précède ce détecteur) dont la sortie est reliée à une autre entrée de l'étage de mémorisation et/ou de visualisation 60, soit placée en sortie du circuit 210 et comprenant alors un détecteur d'enveloppe numérique dont la sortie est reliée à ladite autre entrée de l'étage 60.

Dans le mode de réalisation qui a été décrit jusqu'à présent, le résultat de mesure pour chaque cible ponctuelle sélectionnée est une différence de temps de vol. Une variante de réalisation consiste à mettre en place des moyens pour obtenir non pas une telle différence, mais sa dérivée. Plus précisément (voir la figure 2), ce deuxième mode de réalisation prévoit, en plus des circuits précédemment cités, un circuit de soustraction 510 recevant sur une première entrée de signe déterminé, par exemple ici positive, directement la sortie du soustracteur 500, avec lequel il est donc en série, et sur une deuxième entrée de signe contraire cette même sortie du soustracteur 500 mais après traversée d'une mémoire-tampon 520 retardant au moins d'un coup d'horloge cette sortie. Le signal de différence ainsi obtenu est la dérivée de la différence de temps de vol et est fourni à l'entrée 560 de l'étage de mémorisation et/ou de visualisation 60. Un perfectionnement de cette structure, conduisant à un troisième mode de réalisation (qui est celui représenté sur la figure 2), consiste à prévoir, en plus des circuits 510 et 520, un interrupteur 521 commandé par un circuit de sélection de paramètre 522. La présence de ces deux éléments supplémentaires permet de mettre, ou non, hors circuit la mémoire-tampon 520 et donc d'opérer avec des différences de temps de vol, ou avec des dérivées de telles différences si l'on veut favoriser l'observation d'éventuelles variations locales de la vitesse ultrasonore.

En principe, les transducteurs d'émission-réception et de réception 10 et 20 sont similaires. Dans la réalité, il peut être intéressant d'avoir prévu un transducteur d'émission-réception 10 dont la fréquence de résonance est supérieure à celle du transducteur de réception 20. En effet, comme les milieux explorés par les ondes ultrasonores ont un effet de filtre passe-bas, le fonctionnement du transducteur de réception devient ainsi optimal, si du moins l'écart entre lesdites fréquences de résonance est judicieusement choisi. Il est avantageux, également, d'utiliser un transducteur d'émission-réception 10 qui soit focalisant, car ce choix permet alors de sélectionner exactement les cibles ponctuelles se trouvant sur l'axe de propagation principal de celui-ci, pour éviter des erreurs de parallaxe. On peut aussi prévoir une focalisation synthétique à l'émission, ce qui est intéressant notamment en contrôle destructif de matériaux. Le transducteur de réception 20 est alors, à cet effet, également émetteur et relié à l'étage d'émission 30 par l'intermédiaire d'un circuit à retard destiné à appliquer à ce transducteur une loi de retard variable.

Bien entendu, la présente invention n'est pas limitée aux exemples de réalisation qui viennent d'être décrits et représentés et à partir desquels d'autres variantes peuvent être proposées sans pour cela sortir du cadre de l'invention.

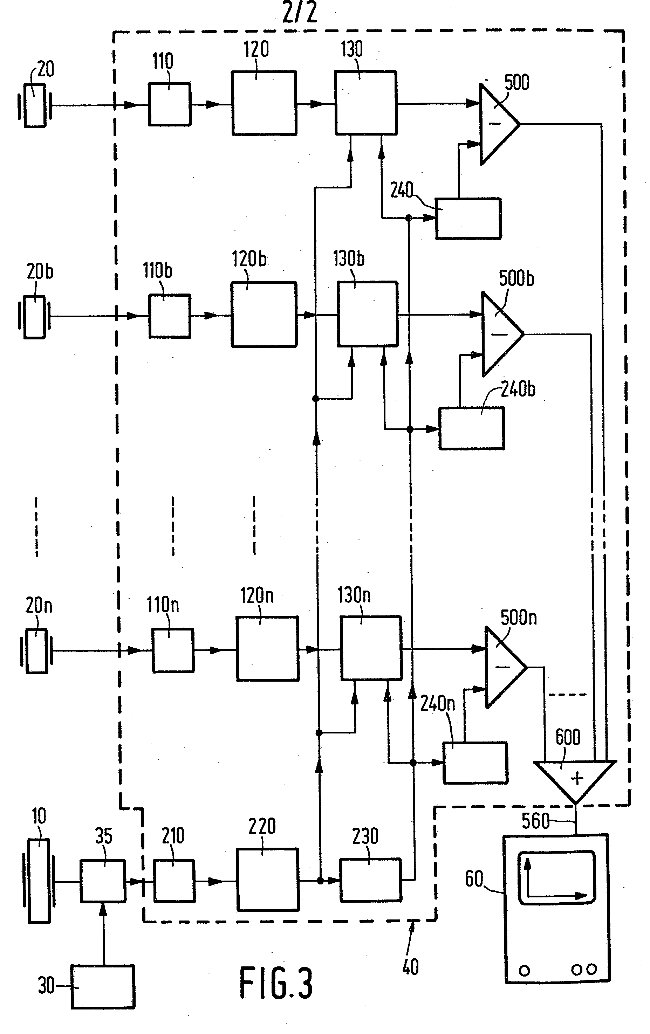

L'invention peut, en particulier, être généralisée au cas où plusieurs transducteurs de réception sont répartis symétriquement autour du transducteur d'émission-réception 10. L'appareil d'examen comprend, dans ce quatrième mode de réalisation représenté sur la figure 3, n transducteurs de réception identiques 20, 20b, 20c,..., 20i, ..., 20n, n voies identiques 100, 100b, 100c,..., 100i,..., 100n de traitement des échos renvoyés vers ces transducteurs de réception par les obstacles rencontrés dans la région à explorer, et n soustracteurs identiques 500, 500b, 500c,..., 500i,..., 500n. Les n premières entrées de ces n soustracteurs reçoivent le signal de sortie des n voies correspondantes 100 à 100n, leurs n deuxièmes entrées reçoivent le signal de sortie de n circuits de calcul de temps de vol 240, 240b, 240c,..., 240i,..., 240n placés en parallèle en sortie du circuit de sélection de distance 230 de la voie de traitement 200, et un additionneur 600 effectue la somme des signaux de sortie de ces soustracteurs qui est ensuite envoyée sur l'entrée 560 de l'étage 60.

Comme précédemment, il est possible et avantageux d'équiper l'appareil de n circuits de soustraction 510 à 510n, de n mémoires-tampon 520 à 520n, de n interrupteurs 521 à 521n et de n circuits de sélection de paramètre 522 à 522n pour travailler au choix avec des différences de temps de vol ou avec des dérivées de telles différences. Dans l'un ou l'autre cas, le fait d'avoir prévu plusieurs transducteurs de réception (et les voies de traitement correspondantes) permet par moyennage de s'affranchir des perturbations éventuellement engendrées par l'anisotropie du milieu. Il est possible également de prévoir non pas un simple additionneur effectuant une somme de différences de temps de vol (ou de dérivées de différences de temps de vol) mais un opérateur faisant appel à un estimateur plus complexe, par exemple un opérateur évaluant la dérivée de la somme des différences de temps de vol. Une variante de réalisation consiste aussi à prévoir juste avant l'additionneur 600 un circuit de sélection de l'une ou de plusieurs des voies de traitement 100 à 100n, afin de pouvoir, par des sélections successives, comparer par exemple des variations de vitesse selon des directions différentes.

Enfin, la focalisation synthétique à l'émission prévue dans le cas d'un seul transducteur de réception peut aussi être mise en oeuvre dans le cas où il est prévu n transducteurs de réception 20, 20b, 20c,..., 20n. Ces transducteurs sont alors également émetteurs, et les n transducteurs émetteurs-récepteurs ainsi constitués et le transducteur d'émission-réception 10 sont reliés à l'étage d'émission 30 par l'intermédiaire de (n+1) circuits à retard, destinés à permettre ladite focalisation synthétique pour une profondeur moyenne donnée sur l'axe du transducteur d'émission-réception 10. Des circuits d'interface (en nombre n+1) peuvent être prévus comme précédemment pour éviter l'aveuglement de l'étage de réception par l'étage d'émission.

REVENDICATIONS :

1.          Appareil d'examen de milieux par échographie ultrasonore comprenant au moins un transducteur ultrasonore d'émission et au moins un transducteur ultrasonore de réception auxquels sont associés un étage d'émission pour l'émission répétée d'ondes ultrasonores vers la région à explorer, un étage de réception constitué d'une voie de traitement des échos renvoyés vers le transducteur de réception par les obstacles rencontrés dans ladite région, et un étage de mémorisation et/ou de visualisation des informations délivrées par l'étage de réception, caractérisé en ce que le transducteur d'émission est également récepteur et en ce que l'étage de réception comprend aussi une voie de traitement des signaux de sortie dudit transducteur d'émission-réception ainsi constitué et un soustracteur dont la sortie est reliée à une première entrée de l'étage de mémorisation et/ou de visualisation et dont les deux entrées reçoivent les signaux de sorties desdites voies représentatifs des temps de vol respectivement réel et théorique entre les transducteurs.

2.          Appareil selon la revendication 1, dans lequel la première voie de traitement comprend en série un premier convertisseur analogique-numérique, une première mémoire et un premier circuit de traitement, caractérisé en ce que la voie de traitement des signaux de sortie du transducteur d'émission-réception comprend en série un circuit de conversion analogique-numérique, un circuit de mémorisation, un circuit de sélection de distance, et un circuit de calcul de temps de vol, les sorties du circuit de mémorisation et du circuit de sélection de distance étant envoyées vers le premier circuit de traitement.

3.          Appareil selon la revendication 2, caractérisé en ce qu'il comprend à l'entrée du circuit de conversion analogique-numérique une voie de traitement traditionnel comprenant elle-même au moins un détecteur d'enveloppe analogique dont la sortie est reliée à une deuxième entrée de l'étage de mémorisation et/ou de visualisation.

4.          Appareil selon la revendication 2, caractérisé en ce qu'il comprend en sortie du circuit de conversion analogique-numérique une voie de traitement traditionnel comprenant elle-même au moins un détecteur d'enveloppe numérique dont la sortie est reliée à une deuxième entrée de l'étage de mémorisation et/ou de visualisation.

5.          Appareil selon l'une des revendications 2 à 4, caractérisé en ce qu'il est équipé d'une commande de balayage permettant une acquisition de résultats ligne par ligne puis la représentation bidimensionnelle de ces résultats.

6.     Appareil selon l'une des revendications 2 à 5, caractérisé en ce qu'il comprend en série avec le soustracteur un circuit de soustraction recevant sur une première entrée de signe déterminé directement la sortie dudit premier soustracteur et, sur sa deuxième entrée de signe contraire, également ladite sortie du premier soustracteur mais par l'intermédiaire d'une mémoire-tampon, la sortie de ce circuit de soustraction étant reliée à la première entrée de l'étage de mémorisation et/ou de visualisation.

7.     Appareil selon la revendication 6, caractérisé en ce qu'il comprend, en série avec la mémoire-tampon, un interrupteur commandé par un sélecteur de paramètre.

8.     Appareil selon l'une des revendications 6 et 7, caractérisé en ce que la fréquence de résonance du transducteur d'émission-réception est supérieure à celle du transducteur de réception.

9.     Appareil selon l'une des revendications 2 à 8, caractérisé en ce que le transducteur d'émission-réception est focalisant.

10.     Appareil selon l'une des revendications 2 à 9, caractérisé en ce que le transducteur de réception est relié à l'étage d'émission par l'intermédiaire d'un circuit à retard destiné à appliquer à ce transducteur une loi de retard variable pour effectuer une focalisation synthétique à l'émission.

11.     Appareil selon l'une des revendications 2 à 10, caractérisé en ce qu'il comprend n transducteurs de réception, en ce que l'étage de réception comprend n voies identiques de traitement des échos renvoyés vers les transducteurs de réception correspondants par les obstacles rencontrés dans la région à explorer, en ce que sont prévus n soustracteurs, dont les n premières entrées reçoivent le signal de sortie des n voies correspondantes de traitement, et dont les n deuxièmes entrées reçoivent le signal de sortie de n circuits de calcul de temps de vol placés en parallèle en sortie du circuit de sélection de distance dans la voie de traitement des signaux de sortie du transducteur d'émission-réception, et en ce que les n sorties desdits soustracteurs sont reliées aux n entrées correspondantes d'un additionneur dont la sortie est reliée à la première entrée de l'étage de mémorisation et/ou de visualisation.

12. Appareil selon la revendication 11, c.aractérisé en ce qu'il comprend juste avant l'additionneur un circuit de sélection de l'une des n voies de traitement, la sortie de ce circuit de sélection étant reliée à la première entrée de l'étage de mémorisation et/ou de visualisation.

13. Appareil selon l'une des revendications 11 et 12, caractérisé en ce qu'il comprend en série avec chaque soustracteur un circuit de soustraction recevant sur sa première entrée de signe déterminé directement la sortie dudit soustracteur correspondant et, sur sa deuxième entrée de signe contraire, également ladite sortie du soustracteur correspondant mais par l'intermédiaire d'une mémoire-tampon, les n sorties desdits circuits de soustraction étant reliées aux n entrées correspondantes de l'additionneur ou du circuit de sélection.

14. Appareil selon la revendication 13, caractérisé en ce qu'il comprend, en série avec chaque mémoire-tampon, un interrupteur correspondant, l'ensemble de ces interrupteurs étant commandé par un sélecteur de paramètre.

15. Appareil selon l'une des revendications 2 à 14, caractérisé en ce que le ou les transducteurs de réception sont également émetteurs et en ce que les transducteurs émetteurs-récepteurs ainsi constitués et le transducteur d'émission-réception sont reliés à l'étage d'émission par l'intermédiaire de (n+1) circuits à retard destinés à permettre une focalisation synthétique pour une profondeur moyenne donnée sur l'axe du transducteur d'émission-réception.

FIG.1

FIG.2

FIG.3

2/2

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | US-A-4 206 653 (LE MAY)<br><br>* Résumé, figures 5-8; colonne 4, ligne 57 - colonne 9, ligne 43 *<br><br>--- | 1,2,5,<br>6,11 | G 01 S 7/52<br>G 01 S 15/89<br>G 01 H 5/00 |
| X | GB-A-2 023 830 (PHILIPS)<br>* Résumé; figure 2; page 1, lignes 28-42; page 4, ligne 37 - page 5, ligne 50; page 6, ligne 35 - page 7, ligne 36 *<br><br>--- | 1 | |
| P,X | EP-A-0 119 019 (HITACHI)<br><br>* En entier *<br><br>--- | 1,2,9-<br>12,15 | |
| A | US-A-4 105 018 (GREENLEAF et al.)<br>* Résumé; figure 9; colonne 10, ligne 33 - colonne 11, ligne 65 *<br><br>--- | 1,2,11<br>,12,15 | **DOMAINES TECHNIQUES RECHERCHES (Int Cl.4)** |
| A | DE-A-3 127 146 (SIEMENS)<br>* Résumé; page 7, ligne 30 - page 10, dernière ligne *<br><br>--- | 1 | G 01 S<br>G 01 N<br>G 01 H<br>G 06 F<br>A 61 B |
| A | US-A-4 075 883 (GLOVER)<br><br>--- | | |
| A | EP-A-0 008 197 (COMMONWEALTH OF AUSTRALIA)<br><br>----- | | |

Le présent rapport de recherche a été établi pour toutes les revendications

| Lieu de la recherche | Date d achèvement de la recherche | Examinateur |
|---|---|---|
| LA HAYE | 14-08-1985 | OLDROYD D.L. |